# FASCICULE DE BREVET EUROPEEN

(11) **EP 0 545 276 B1**
(45) Date de publication et mention de la délivrance du brevet: **18.09.1996**
(21) Numéro de dépôt: 92120157.0
(22) Date de dépôt: 26.11.1992
(51) Int. Cl.: G01K 11/06

(54) **Indicateur d'état de conservation pour produits congelés ou refrigerés de type industriel, médical ou alimentaire**
Konservierungszustandsmelder für gekühlte oder gefrorene industrielle medizinische Produkte sowie für Lebensmittel
Preservation state indicator for refrigerated or frozen products of industrial, medical or foodstuff type

(30) Priorité: 03.12.1991 FR 9115059
(43) Date de publication de la demande: 09.06.1993
(73) Titulaire: SOCIETE COOL S.a.r.l., F-07800 La Voulte sur Rhône (FR)
(72) Inventeur: Toporenko, Yves, F-75011 Paris (FR); Berrebi, Georges, F-26500 Bourg les Valences (FR)
(74) Mandataire: Andreeff, François

(56) Documents cités:
- EP-A- 0 497 638
- FR-A- 2 153 540
- PATENT ABSTRACTS OF JAPAN, vol. 13, no. 382 (P-923) 24 août 1989; & JP-A-11 34 219

## Description

La présente invention concerne un indicateur d'état de conservation qui ici est un dispositif permettant de reconnaître par un simple examen visuel si un produit froid et surtout surgelé est propre ou non à la consommation.

Les surgelés sont des produits sûrs, fabriqués avec une extrême rigueur présentant des intérêts incontestables sur le plan microbiologique (au-dessous de - 18 °C, les micro-organismes ne se développent plus), toutefois des intoxications alimentaires sont possibles, notamment dans le cas où les surgelés sont accidentellement décongelés puis recongelés.

Un acheteur doit pouvoir vérifier qu'un produit n'a subi aucune rupture de la chaîne du froid. En dehors de l'examen des boîtes ou des paquets proposés sur le marché des consommateurs, cet examen n'étant d'ailleurs pas fiable, on trouve un dispositif décrit dans le brevet français relatif aux produits surgelés (à - 18 °C au moins) FR-A-2626072 de Monsieur TOPORENKO (ainsi que des demandes de brevets ultérieures énumérées ci-dessous) proposant un moyen de détection simple et rapide d'une rupture de la chaîne du froid ; en effet, le principe consiste à utiliser un petit glaçon de forme géométrique coloré dans sa masse, fluorescent de surcroît, moulé sur un support, le tout étant intégré à l'intérieur d'une minuscule boîte hermétique transparente qui accompagne l'emballage du produit surgelé d'une façon inviolable.

Diverses techniques de la demanderesse concernent à la fois de nouvelles réalisations pratiques perfectionnées du dispositif de l'art antérieur, grâce notamment à l'emploi d'un mélange particulier de constitution sensiblement eutectique introduit à l'intérieur du dispositif selon l'invention ; ce mélange, en changeant la nature du liquide eutectique permet d'obtenir des indications de conservation non seulement pour des produits surgelés mais également pour des produits moins froids, tels que les glaces à consommer sur place. Par exemple, on peut utiliser des mélanges aptes à contrôler des températures de l'ordre de 0 °C, - 5 °C, - 12 °C, - 16 °C, - 18°C et - 21 °C.

Le dit mélange subit une congélation qui, par exemple, peut provoquer une fracture de l'étui qui le contient.

Si le produit froid, gelé ou surgelé subit ensuite un phénomène de décongélation, le glaçon du dispositif fond et laisse apparaître le support sur lequel il a été moulé.

Les appareillages utilisés avec leur liquide à base d'au moins un eutectique comprennent un intégrateur de température qui prend en compte non seulement la variation de température, mais également sa durée. Il peut être utilisé pour le froid négatif et le froid positif. Ces procédés simples et peu coûteux, de l'ordre de quelques dizaines de centimes français par emballage de produit surgelé ont l'avantage d'avoir un fonctionnement irréversible et fiable.

Ces dispositifs sont destinés à être adjoints par fixation (collage ou agrafage) à l'intérieur ou à l'extérieur de l'emballage de protection d'un produit réfrigéré à caractère alimentaire industriel, médical ou pharmaceutique.

D'une façon générale, ce type de dispositif comporte un témoin de fusion matérialisé par un volume géométrique obtenu par congélation d'une substance liquide qui est de préférence colorée dans sa masse, afin de la rendre plus visible de l'extérieur de l'emballage de protection dans lequel elle se trouve placée. Ce liquide peut être luminescent, fluorescent, phosphorescent selon les cas ; il est constitué par la congélation d'un liquide auquel sont mélangés différents adjuvants (produits colorants, luminescents, fluorescents, phosphorescents, antigel) de façon à prédéterminer l'image thermique ou frigorifique du produit réfrigéré auquel il est adjoint.

Le témoin de fusion est placé vers le centre d'une enceinte hermétique qui peut être constituée d'un simple sachet ou étui.

Le sachet ou étui (cylindre, ampoule, anneau, prisme, sphère, parallélépipède -cube en particulier- etc) sont munis d'index de centrage dans leurs parties internes, de façon à pouvoir disposer le témoin de fusion au centre géométrique de leur cavité ; ils sont rendus étanches par construction après inclusion du témoin de fusion.

La présente invention concerne un dispositif particulier adaptable aux indicateurs d'état de conservation pour produits congelés ou réfrigérés, tels ceux décrits dans le brevet français FRA-2626072 ou encore les demandes de brevets français n° 90-14341, 91-00101, 91-02442, 91-05676, 91-07928, 91-07929, 91-10593 et 91-10469.

Selon la présente invention, l'indicateur d'état de conservation pour produits congelés ou réfrigérés de type industriel ou alimentaire est caractérisé par l'utilisation d'un étui, en matière plastique transparente ou en verre, de forme géométrique quelconque dont l'orifice de remplissage est obturé par un bouchon de cire coulé à chaud sur la surface du liquide disposé à l'intérieur de l'étui et permet d'obtenir un remplissage intégral de la cavité interne à l'étui comme il sera expliqué dans la description des figures.

L'indicateur d'état selon l'invention peut, en outre, se caractériser par la réalisation à l'intérieur d'un étui de protection cylindrique, d'un étui réservoir concentrique au premier par moulage de l'ensemble, ou par emboîtement d'un tube cylindrique en matière plastique ou en verre, d'une hauteur inférieure à la profondeur de l'étui de protection extérieure, sur un bouchon intérieur ou mamelon propre à l'étui de protection extérieure du dispositif, la fermeture de l'orifice de remplissage de l'étui intérieur et de l'étui de protection extérieur étant réalisée par coulage de deux bouchons de cire.

L'indicateur d'état de conservation selon l'invention peut également être caractérisé par l'utilisation d'un séparateur placé à la surface de séparation de deux liquides non miscibles ou de deux matières ayant des températures différentes, afin d'éliminer les tensions superficielles, ce séparateur pouvant être un indicateur colorimétrique qui détecte un vieillissement ou une altération des produits utilisés, en mettant en évidence leur indice d'acidité.

L'indicateur d'état selon l'invention, dans une forme particulière, est caractérisé par l'utilisation d'un bouchon en cire intégrant un capillaire, et déterminant dans un étui en matière plastique ou en verre deux cavités de part et d'autre de ce bouchon, l'une contenant un liquide eutectique ou une solution alcoolique, remplissant la cavité ainsi définie d'une manière intégrale, l'autre cavité étant remplie à 90 % de sa capacité et recevant un liquide identique mais de pH opposé auquel on a ajouté un réactif coloré (par exemple bromotymol, tournesol, etc.) engendrant une réaction colorimétrique sur l'ensemble des liquides remplissant l'étui lors d'un changement de phase "solidus-liquidus" à la décongélation après destruction du bouchon dans la phase "liquidus-solidus".

Dans d'autres formes de réalisation, l'indicateur d'état de conservation est caractérisé par une cloison en cire qui glisse ou se détruit à l'intérieur d'un étui en matière plastique ou en verre provoquée par l'augmentation de volume d'un liquide emprisonné dans une cavité par cette cloison ou ce bouchon avant congélation ; la destruction par fissuration ou le glissement du bouchon permet la migration du liquide provenant de la masse solidifiée lors d'une décongélation vers une matière absorbante ou adsorbante qui se colore par la nature du liquide utilisé, ou par réaction colorimétrique due au pH.

L'indicateur d'état peut encore être caractérisé par l'utilisation d'un étui en matière plastique ou en verre qui possède dans sa partie intérieure un étranglement ou une diminution de section, ou des protubérances internes sous forme de pointes venues de moulage et disposées orthogonalement par rapport à l'axe longitudinal de l'étui.

De préférence, on utilise à titre de cire soit une paraffine, soit la stéarine, soit toute cire équivalente.

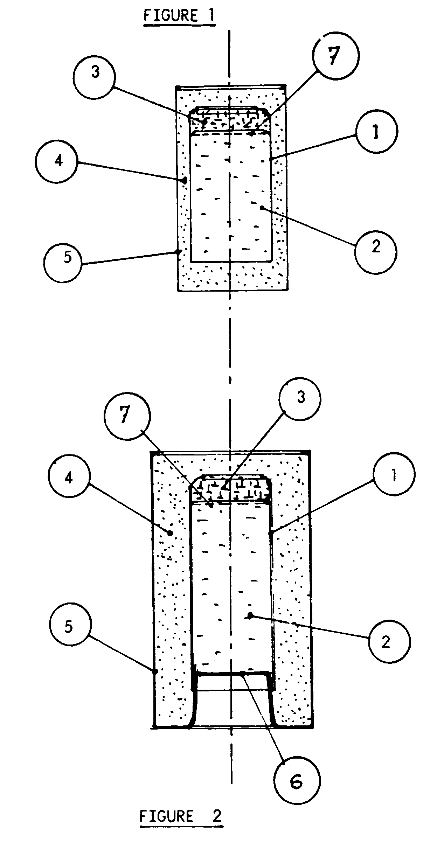

Les figures 1 à 5 illustrent l'invention.

La figure 1 représente un indicateur d'état de conservation pour produits congelés ou réfrigérés, constitué d'un étui 1 pouvant avoir une forme cubique, tronconique, sphérique, cylindrique pour la plus utilisée, ayant un orifice de remplissage dont les bords sont incurvés vers l'intérieur de la cavité que représente l'étui réservoir.

L'étui réservoir 1 est rempli de liquide eutectique 2 ou d'une solution alcoolique, à 90 % de sa capacité. L'obturation de l'étui 1 est réalisée en complétant le remplissage en coulant à chaud de la paraffine 3 (la paraffine peut être remplacée par de la stéarine ou une cire équivalente). Par cette méthode on obtient un remplissage intégral de l'étui réservoir 1.

L'étui réservoir peut être en verre, en matière plastique et il est entouré d'une matière absorbante ou adsorbante 4 (papier buvard, coton, ponce, etc.) l'ensemble est ensuite disposé dans l'étui de protection 5 étanche et transparent.

La figure 2 représente un étui réservoir 1 constitué d'un tube cylindrique en matière plastique ou en verre, emboîté sur un mamelon 6 disposé à l'intérieur du boîtier de protection extérieur 5 et qui fait office de bouchon. La hauteur de l'étui est très inférieure à la profondeur intérieure de l'étui de protection 5. La partie supérieure de l'étui, réservoir 1 constitue son orifice de remplissage, ses bords sont incurvés vers l'intérieur de l'étui. Comme pour le dispositif de la figure 2, l'étui réservoir est rempli à 90 % de sa capacité de liquide eutectique ou d'une solution alcoolique 2, on complète le remplissage avec de la paraffine ou de la stéarine chaude de façon à constituer l'obturation 3, on obtient également un remplissage intégral. L'espace intérieur entre l'étui réservoir 1 et l'étui de protection 5 est rempli d'une matière absorbante ou adsorbante 4. On procède ensuite à la fermeture de l'étui de protection extérieure 5 par la mise en place du bouchon par collage ou soudure.

Dans les deux dispositifs décrits faisant l'objet des figures 1 et 2 une disposition supplémentaire peut s'imposer, dans le cas ou la paraffine ou tout autre produit similaire coulé à chaud sur liquide froid ou à tension de vapeur élevée non miscible, risque d'engendrer une tension superficielle élevée dans le plan de séparation des deux produits et engendrer une cavité gazeuse qui peut nuire à l'effet physique de dilatation du liquide de l'étui qui doit provoquer la rupture de l'enveloppe. Cet effet n'existe pas si les liquides et matières utilisés pour remplir et obturer l'étui sont à la même température. Pour pallier ces difficultés, on peut disposer un séparateur 7 entre les deux produits ou matières utilisés.

Cette surface de séparation ou ce séparateur peut être mis à profit en y disposant un indicateur coloré qui peut réagir et signifier un indice de vieillissement du produit qui remplit l'étui, ou du dispositif dans son ensemble, lorsque son indice d'acidité augmente ou diminue.

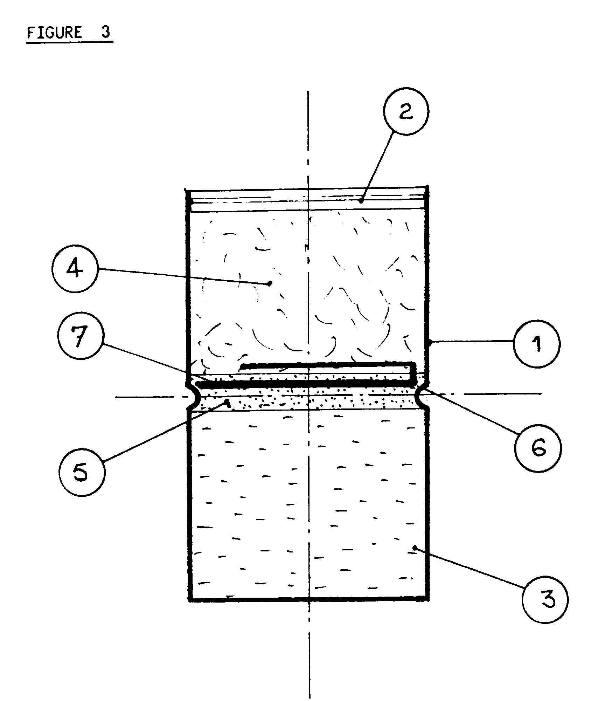

La figure 3 représente la conception d'une autre forme d'indicateur d'état de conservation pour produits congelés ou réfrigérés, il est constitué d'un étui cylindrique 1, muni de son bouchon d'obturation 2, l'ensemble étant réalisé en matière plastique transparente, ou en verre, de manière à résister aux contraintes mécaniques internes et externes. L'étui 1 possède dans sa partie médiane un étranglement 6 venu de fabrication qui constitue une diminution de sa section interne.

La réalisation de l'indicateur consiste à remplir de liquide eutectique ou d'une solution alcoolique 3 la cavité de l'étui située en dessous de l'étranglement 6, et de couler une pellicule de paraffine ou de stéarine. On place sur cette pellicule de paraffine ou de stéarine un capillaire 7 matérialisé par une pastille de papier buvard, un cordonnet de fil en coton ou en lin etc. dont le prolongement est raccordé à un marqueur 4 disposé dans la cavité située au dessus de l'étranglement 6. On coule une deuxième pellicule de paraffine ou de stéarine afin d'emprisonner le capillaire, et constituer le bouchon 5 qui matérialise la cloison entre les deux cavités internes à l'étui. Le marqueur 4 est réalisé au moyen d'une matière absorbante ou adsorbante (coton, papier buvard, capillaires, etc.) visible à travers le corps de l'étui et le bouchon 2 qui représente une surface d'observation. L'étui est obturé d'une manière étanche en collant ou en soudant le bouchon. Fonctionnement : en phase de congélation le liquide 3 se solidifie, augmente de volume et s'expanse en brisant la cloison 5. En phase de décongélation, la masse 3 solidifiée, se liquéfie et imprègne le capillaire qui assure la migration du liquide vers la matière absorbante ou adsorbante 4 qui se colore, et signale le changement d'état, visible à travers le bouchon si celui-ci est conçu sous la forme d'une loupe.

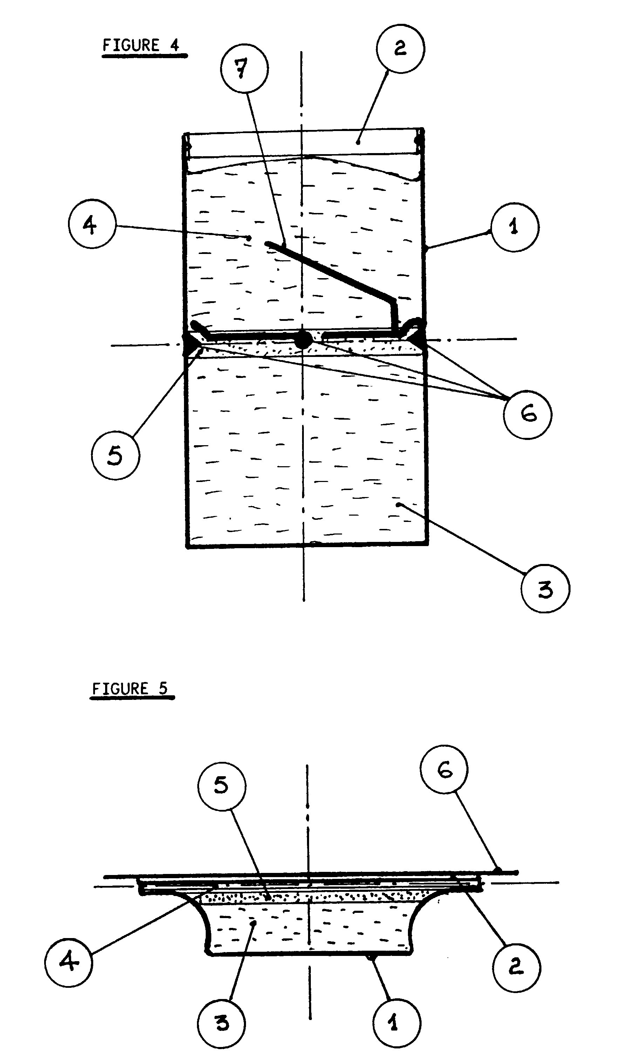

La figure 4 représente un détecteur de décongélation sensiblement similaire à celui décrit précédemment, la partie intérieure de l'étui 1 est tronconique intérieurement, la grande base constituant l'orifice de remplissage de l'étui où vient se placer le bouchon 2 de fermeture. La partie médiane de l'étui est pourvue de quatre pointes internes disposées orthogonalement.

La matière absorbante 4 du dispositif précédent est remplacée par un liquide eutectique ou une solution alcoolique identique à celle 3 qui se trouve en dessous du bouchon de paraffine 5 ou de stéarine et qui remplit la cavité ainsi définie d'une manière intégrale. La grande particularité réside dans le fait que la cavité supérieure au bouchon est remplie à 90 % de sa capacité et que l'on a ajouté un réactif coloré (bromotymol, tournesol, etc.).
Fonctionnement : En phase de congélation le liquide 3 se solidifie et s'expanse en brisant ou en faisant glisser la cloison constituée par le bouchon 5. En phase de décongélation, la masse 3 solidifiée se liquéfie et migre par le capillaire 7 et l'espace libéré par le glissement de la cloison ou bouchon 5 entraînant le changement de teinte de l'ensemble des liquides qui remplissent l'étui.

La figure 5 représente un détecteur conçu à partir d'une capsule thermoformée en matière plastique transparente dont les repères indiquent :
1. Corps de l'étui.
2. Pellicule plastique collée, faisant bouchon.
3. Liquide eutectique ou solution alcoolique.
4. Matière absorbante ou adsorbante.
5. Pellicule de paraffine ou de stéarine.
6. Adhésif double face avec fenêtre d'observation.

## Revendications

1. Indicateur d'état de conservation pour produits congelés ou réfrigérés de type industriel, médical ou alimentaire caractérisé par l'utilisation d'un étui, en matière plastique transparente ou en verre, de forme géométrique quelconque dont l'orifice de remplissage est obturé par un bouchon de cire coulé à chaud sur la surface du liquide disposé à l'intérieur de l'étui et permet d'obtenir un remplissage intégral de la cavité interne à l'étui.

2. Indicateur d'état selon la revendication 1 caractérisé par la réalisation à l'intérieur d'un étui de protection cylindrique, d'un étui réservoir concentrique au premier par moulage de l'ensemble, ou par emboîtement d'un type cylindrique en matière plastique ou en verre, d'une hauteur inférieure à la profondeur de l'étui de protection extérieure, sur un bouchon intérieur ou mamelon propre à l'étui de protection extérieur du dispositif, la fermeture de l'orifice de remplissage de l'étui intérieur et de l'étui de protection extérieur étant réalisée par coulage de deux bouchons de cire.

3. Indicateur d'état de conservation selon l'une des revendications 1 et 2 caractérisé par l'utilisation d'un séparateur placé à la surface de séparation de deux liquides non miscibles ou de deux matières ayant des températures différentes, afin d'éliminer les tensions superficielles ; ce séparateur pouvant être un indicateur colorimétrique qui détecte un vieillissement ou une altération des produits utilisés, en mettant en évidence leur indice d'acidité.

4. Indicateur d'état selon l'une des revendications 1 à 3 caractérisé par l'utilisation d'un bouchon en cire intégrant un capillaire et déterminant dans un étui en matière plastique ou en verre deux cavités de part et d'autre de ce bouchon, l'une contenant un liquide eutectique ou une solution alcoolique, remplissant la cavité ainsi définie d'une manière intégrale, l'autre cavité étant remplie à 90 % de sa capacité et recevant un liquide identique mais de pH opposé auquel on a ajouté un réactif coloré (par exemple bromotymol, tournesol, etc.) engendrant une réaction colorimétrique sur l'ensemble des liquides remplissant l'étui lors d'un changement de phase "solidus-liquidus" à la décongélation après destruction du bouchon dans la phase "liquidus-solidus".

5. Indicateur d'état de conservation selon l'une des revendications 1 à 4 caractérisé par une cloison en cire qui glisse ou se détruit à l'intérieur d'un étui en matière plastique ou en verre provoquée par l'augmentation de volume d'un liquide emprisonné dans une cavité par cette cloison ou ce bouchon avant congélation, la destruction par fissuration ou le glissement du bouchon permettant la migration du liquide provenant de la masse solidifiée lors d'une décongélation vers une matière absorbante ou adsorbante qui se colore par la nature du liquide utilisé, ou par réaction colorimétrique due au pH.

6. Indicateur d'état selon l'une des revendications 1 à 5 caractérisé par l'utilisation d'un étui en matière plastique ou en verre qui possède dans sa partie intérieure un étranglement ou une diminution de section ou des protubérances internes sous forme de pointes venues de moulage et disposées orthogonalement par rapport à l'axe longitudinal de l'étui.

7. Indicateur d'état selon l'une des revendications 1 à 6 dans lequel la cire est une paraffine.

8. Indicateur d'état selon l'une des revendications 1 à 7 dans lequel la cire est la stéarine.

## Patentansprüche

1. Konservierungszustandsmelder für gefrostete oder tiefgekühlte Produkte vom Typ Industrieware, Medizin oder Nahrungsmittel, gekennzeichnet durch die Verwendung einer Hülle aus transparentem Kunststoffmaterial oder aus Glas beliebiger geometrischer Form, deren Füllöffnung durch einen Stopfen aus Wachs verschlossen ist, der heiß auf die Oberfläche der im Inneren der Hülle angeordneten Flüsigkeit vergossen wird und es ermöglicht, eine integrale Füllung des Hohlraums im Inneren der Hülle zu erhalten.

2. Zustandsmelder nach Anspruch 1, gekennzeichnet durch die Realsisierung - im Inneren einer zylindrischen Schutzhülle - einer Speicherhülle konzentrisch zur ersten durch Formen der Anordnung oder durch Einstecken eines zylindrischen Rohrs aus plastischem Material oder aus Glas von einer Höhe, die geringer als die Tiefe der äußeren Schutzhülle ist, auf einen der äußeren Schutzhülle der Vorrichtung eigenen Innenstopfen oder Nippel, wobei das Schließen der Füllöffnung der inneren Hülle und der äußeren Schutzhülle durch Gießen von zwei Wachsstopfen vorgenommen wird.

3. Konservierungszustandsmelder nach einem der Ansprüche 1 und 2, gekennzeichnet durch die Verwendung eines Separators, der an der Trennfläche der beiden nicht mischbaren Flüssigkeiten oder von zwei Materialien mit unterschiedlichen Temperaturen angeordnet wird, um die Oberflächenspannungen zu eliminieren, wobei dieser Separator ein Farbindikator sein kann, der eine Alterung oder eine Veränderung der verwendeten Produkte erfaßt, indem er ihren Aciditätsindex kenntlich macht.

4. Zustandsmelder nach einem der Ansprüche 1 bis 3, gekennzeichnet durch die Verwendung eines Stopfens aus Wachs, der integral eine Kapillare erfaßt und in einer Hülle aus Plastikmaterial oder Glas zwei Hohlräume zu beiden Seiten dieses Stopfens bestimmt, von denen der eine eine eutektische Flüssigkeit oder eine alkoholische Lösung enthält, wobei der so definierte Hohlraum in einheitlicher Weise gefüllt wird und der andere Hohlraum zu 90 % seines Fassungsvermögens gefüllt wird und eine identische Flüssigkeit, jedoch von entgegengesetztem pH-Wert aufnimmt, der man ein gefärbtes Reaktionsmittel (beispielsweise Bromotymol, Lackmus, etc.) zugesetzt hat, wobei eine colorimetrische Reaktion an der Gesamtheit der die Hülle füllenden Flüssigkeiten bei einer Veränderung der "Solidus-Liquidusphase" bei der Entfrostung nach Zerstörung des Stopfens in der "Liquidus-Solidusphase" durchgeführt wird.

5. Konservierungszustandsmelder nach einem der Ansprüche 1 bis 4, gekennzeichnet durch eine Trennwand aus Wachs, die gleitet oder sich im Inneren einer Hülle aus plastischem Material oder aus Glas zerstört, hervorgerufen durch die Volumenerhöhung einer Flüssigkeit, die in einem Hohlraum durch diese Trennwand oder diesen Stopfen vor dem Gefrieren eingeschlossen ist, wobei die Zerstörung durch Rißbildung oder Gleiten des Stopfens die Wanderung der Flüssigkeit, die aus der verfestigten Masse bei einer Entfrostung stammt, gegen ein absorbierendes oder adsorbierendes Material ermöglicht, welches sich aufgrund der Natur der verwendeten Flüssigkeit oder durch colorimetrische Reaktion aufgrund des pH-Werts einfärbt.

6. Zustandsmelder nach einem der Ansprüche 1 bis 5 gekennzeichnet durch die Verwendung einer Hülle aus plastischem Material oder aus Glas, die in ihrem Innenteil eine Einschnürung oder eine Querschnittsverminderung oder innere Vorsprünge in Form von Spitzen aufweist, die durch Formen entstanden orthogonal bezogen auf die Längsachse der Hülle angeordnet sind.

7. Zustandsmelder nach einem der Ansprüche 1 bis 6, bei dem das Wachs ein Paraffin ist.

8. Zustandsmelder nach einem der Ansprüche 1 bis 7, bei dem das Wachs Stearin ist.

## Claims

1. A preservation state indicator for refrigerated or frozen products of industrial, medical or foodstuff type, characterised by the use of a case of transparent plastics material or glass, of any geometrical shape, whose filling orifice is closed by a wax plug hot-cast on the surface of the liquid disposed in the interior of the case and makes it possible to achieve integral filling of the cavity which is internal to the case.

2. A state indicator according to claim 1 characterised by the provision in the interior of a cylindrical protective case of a reservoir case which is concentric with the first by moulding of the assembly or by engagement therein of a cylindrical tube of plastics material or glass, of a height which is less than the depth of the external protective case, on an internal plug or teat particular to the external protective case of the device, closure of the filling orifice of the internal case and the external protective case being effected by casting two wax plugs.

3. A preservation state indicator according to one of claims 1 and 2 characterised by the use of a separator disposed at the surface of separation of two immiscible liquids or two materials at different temperatures in order to eliminate surface tensions; which separator can be a colorimetric indicator which detects ageing or deterioration of the products used, by indicating their acid number.

4. A state indicator according to one of claims 1 to 3 characterised by the use of a wax plug integrating a capillary passage and determining in a case of plastics material or glass two cavities on respective sides of said plug, one containing a eutectic liquid or an alcohol solution integrally filling the cavity defined in that way, the other cavity being filled to 90% of its capacity and receiving an identical liquid but of opposite pH to which there has been added a coloured reactant (for example bromotymol, litmus etc) producing a calorimetric reaction on all of the liquids filling the case upon a 'solidus-liquidus' phase change upon thawing after destruction of the plug in the 'liquidus-solidus' phase.

5. A preservation state indicator according to claims 1 to 4 characterised by a wax partition which slides or is destroyed in the interior of a case of plastics material or glass, which is caused by the increase in volume of a liquid trapped in a cavity by said partition or said plug before freezing, destruction by cracking or sliding of the plug permitting migration of the liquid originating from the solidified mass upon thawing towards an absorbent or adsorbent material which is coloured by the nature of the liquid used or by colorimetric reaction due to the pH.

6. A state indicator according to one of claims 1 to 5 characterised by the use of a case of plastics material or glass which in its internal part has a constriction or a reduction in section or internal protruberances in the form of points which are produced by moulding and which are disposed orthogonally with respect to the longitudinal axis of the case.

7. A state indicator according to one of claims 1 to 6 wherein the wax is a paraffin.

8. A state indicator according to one of claims 1 to 7 wherein the wax is stearin.
